# EUROPEAN PATENT SPECIFICATION

(11) **EP 3 712 656 B1**
(45) Date of publication and mention of the grant of the patent: **01.10.2025**
(21) Application number: 20157612.1
(22) Date of filing: 17.02.2020
(51) Int. Cl.: G01S 13/90, G01S 7/00, H04N 19/00

(54) **METHOD FOR RECONSTRUCTING A MISSING SAMPLE OF A CORRELATED SIGNAL IN A SAR SYSTEM**
VERFAHREN ZUR REKONSTRUKTION EINES FEHLENDEN WERTES EINES KORRELIERTEN SIGNALS IN EINEM SAR-SYSTEM
PROCÉDÉ DE RECONSTRUCTION D'UN ÉCHANTILLON MANQUANT D'UN SIGNAL CORRÉLÉ DANS UN SYSTÈME SAR

(30) Priority: 18.03.2019 DE 102019106858
(43) Date of publication of application: 23.09.2020
(73) Proprietor: Deutsches Zentrum für Luft- und Raumfahrt e.V., 51147 Köln (DE)
(72) Inventor: Gollin, Nicola, 82237 Wörthsee (DE); Martone, Michele, 80686 München (DE); Krieger, Gerhard, 82131 Gauting (DE); Villano, Michelangelo, 82205 Gilching (DE); Rizzoli, Paola, 80686 München (DE)
(74) Representative: dompatent von Kreisler Selting Werner - Partnerschaft von Patent- und Rechtsanwälten mbB

(56) References cited:
- CN-B- 106 199 602
- US-B1- 8 422 799
- NICOLA GOLLIN: "Predictive Quantization for Staggered Synthetic Aperture Radar Systems", THESIS. DLR-IB-HR-OP-2019-77, 10 October 2018 (2018-10-10), XP055678700

## Description

The present invention relates to a method for reconstructing a missing sample of a correlated signal in a SAR (Synthetic Aperture Radar) system, especially for effective data volume reduction in the SAR system. The invention can be specifically used in staggered SAR systems or for SAR systems with gapped SAR data showing a certain degree of correlation in azimuth dimension.

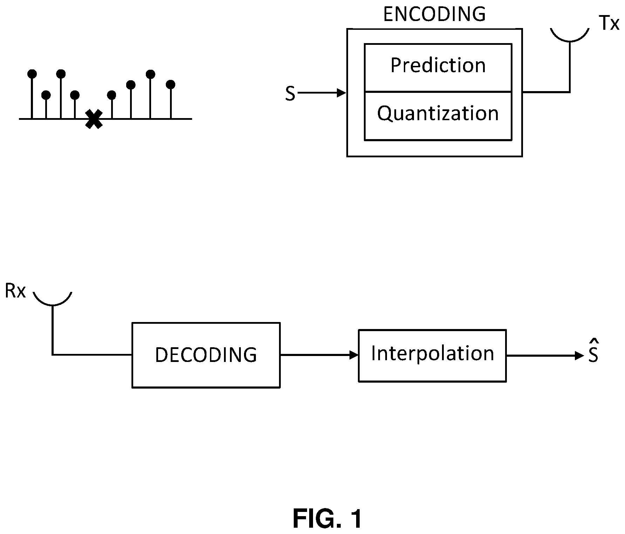

The present invention relates to the general signal processing. Let us consider a partially correlated signal which needs to be transmitted through a channel with limited capacity and is affected by non-consecutive, i.e. less than two subsequent missing samples at certain known positions (i.e. such samples cannot be transmitted through the channel for some reason, and they are represented as information gaps in the received signal). The task consists in the efficient discretization and encoding of the signal by optimizing the resulting data rate and the overall signal quality. The *a-priori* knowledge about the position of the missing samples allows for a better signal reconstruction by means of the joint operation of variable bit rate allocation together with predictive coding. In this way, the encoding of the signal can be carried out by achieving the same quality as of state-of-the-art techniques by reducing, at the same time, the volume of data (bit rate) to be transmitted through the channel. A simplified block scheme of the process is depicted in Fig. 1 in which the upper part represents the encoding process where prediction and quantization allows for the efficient transmission of the channel of a partially correlated signal with missing samples, and the lower part represents the process of decoding and signal reconstruction (interpolation).

For efficient encoding of signals showing some degree of correlation, predictive quantization is known in literature and is largely used especially in the field of audio/speech signals. Typically, a fixed order for the prediction filter is defined at system design stage depending on the achievable prediction gain and on the system complexity. State-of-the-art quantization techniques typically feature a constant bit rate (i.e. not varying in time), which is selected as a trade-off between the data rate and the resulting quality of the reconstructed signal (i.e. the higher the bit rate the higher the signal quality and the bigger the required memory to store it). The recovery of missing samples is then carried out by performing a proper interpolation which allows for the reconstruction of the information gap by exploiting the neighboring samples and the correlation properties among them.

Predictive quantization for applying in staggered SAR systems is described in GOLLIN, Nicola: Predictive quantization for staggered synthetic aperture radar systems. Trient, 2018 (DLR-IB-HR-OP-2019-77). 89S. - Trient, Univ., Master thesis, 2018. From this paper a method for reconstructing a missing sample of a correlating signal in a SAR system is known comprising
- providing, with a predetermined sample frequency, a series of digital sample values of a correlated analog signal including a-priori knowledge of a position of a missing digital sample value within the series of digital sample values, wherein the digital sample values have a predetermined bitrate defined by a predetermined number of bits,
- encoding the series of digital sample values by means of an N-th order predictive quantization, wherein N is a natural number equal to or larger than 1, and
- recovering the missing digital sample value by way of encoding digital sample values following the missing digital value by applying a predictive quantization in that,
   - for the first digital sample value following the missing digital sample value, a quantization is performed and
   - for each of the next digital sample values following said first digital sample value up to the next missing sample value, performing a predictive order quantization.

Predictive quantization relies on the correlation between adjacent samples. In this scenario, the presence of a gap (missing sample) at certain time instants alters the statistic properties on the basis of which the prediction filter is designed. This, in turn, makes the prediction of the subsequent samples imprecise, degrading the resulting performance. Moreover, in case a sample is lost, the higher the order of prediction, the less accurate the discretization of the samples located after the gap (i.e. a sort of error propagation occurs). In addition to that, the use of a constant bit rate in presence of gaps does not exploit the resources (bits) originally allocated for the missing sample which does not carry any useful information.

It is an object of the present invention to provide for an improved method for the reconstruction of a missing sample of a correlated signal in a SAR system for effective data volume reconstruction.

For solving this problem by way of the invention there is provided a method for reconstructing a missing sample of a correlated signal in a SAR system, especially for effective data volume reduction in the SAR system, comprising
- providing, with a predetermined sample frequency, a series of digital sample values of a received correlated analog signal including *a-priori* knowledge of a position of a missing digital sample value within the series of digital sample values, wherein the digital sample values have a predetermined bitrate defined by a predetermined number of bits,
- encoding the series of digital sample values by means of an N-th order predictive quantization, wherein N is a natural number equal to or larger than 1, and
- recovering the missing digital sample value by means of an interpolation allowing for the reconstruction of the missing digital sample value by exploiting the neighboring samples and the correlation properties among them by way of encoding digital sample values following the missing digital sample value by applying a dynamic order predictive quantization in that,
   - for the first digital sample value following the missing digital sample value, a quantization specifically a block-wise quantization such as a block adaptive quantization, is performed and
   - for each of the next digital sample values following said first digital sample value up to the next missing sample value, performing a predictive order quantization, wherein
   - for each of those next respective j-th digital sample values, with j=2,3,...,N, a j-1-th order predictive quantization is performed, and
   - for each of those next respective j-th digital sample values, with j≥N+1, an N-th order predictive quantization is performed.

The *a-priori* information of the position of gaps plays a key role in the invention, allowing for a dynamic behavior of the process in two domains: the prediction order and, if desirable, the bit rate, which are both dynamically set in the gap vicinity. According to the proposed technique, by taking into account the drop of correlation after a gap, the encoder starts from a direct (i.e. not predictive) quantization and then switches to a predictive quantization with increasing order until reaching a targeted order of its predictive quantization, which has been previously defined at system design stage.

For a system, in which, as an illustrative example N is 4 and with 10 digital sample values between a missing digital sample value and the next missing digital sample value, the encoding process for the digital sample values following the missing digital sample up to the next missing digital sample value is as follows:
- the missing digital sample value when considering the numbering of the index j is the 0-th digital sample value (j=0)
- direct quantization for the first sample value (j=1) following the missing sample value (j=0)
- dynamic precision (i.e. dynamic predictive quantization) after a missing digital sample value for each of the next following j-th sample values (j=2,3,4), accordingly a 1^{st} order dynamic precision for the 2^{nd} sample value, a 2^{nd} order dynamic precision for the 3^{rd} sample value, and a 3^{rd} dynamic precision order for the 4^{th} sample value following the missing sample value,
- 4^{th} order prediction for the 5^{th} up to the 10^{th} sample value following the missing sample value.

This example once again is shown in the following table:

| **Miss ing Samp le** | **Direct Quantiz ation** | **1st order Quantiz ation** | **2^{nd} Order Quantiz ation** | **3^{rd} Order Quantiz ation** | **4^{th} Order Quantiz ation** | **4^{th} Order Quantiz ation** |
|---|---|---|---|---|---|---|
| **j=0** | **j=1** | **j=2** | **j=3** | **j=4** | **j=5** | **j=6,7,8, 9,10** |

If there are less than N+1 digital sample values following a missing digital sample value up to the next missing digital sample value, then the process is terminated at the digital sample value proceeding the next missing digital sample value.

In a further advantageous embodiment of the present invention, a dynamic bit allocation for the sample values in the vicinity of the gap is performed. This dynamic bit allocation in the neighborhood of the gap allows for a more accurate interpolation of the missing information. Namely, in case of a gap, the resources (bits) originally allocated for the missing sample value, do not carry any useful information. These resources can be used for the samples adjacent to the gap to achieve a better reconstruction of the missing sample after proper interpolation, hence by mitigating interpolation errors due to the limited signal correlation and quantization performance. The joint operation of dynamic prediction order and variable bit rate guarantees efficient performance at a cost of a slight increase of the required system complexity.

In a further preferred embodiment of the invention, the number of bits of the missing digital sample value are used for increasing the bitrate for at least one of the digital sample values adjacent the missing digital sample value.

Additionally or alternatively, increasing the bitrates for at least two of the digital sample values adjacent the missing digital sample value is applied to the same degree or to substantially the same degree.

In another embodiment of the present invention, the number of bits of the missing digital sample value are used for increasing the bitrate of the digital sample value directly preceding the missing digital sample value and for increasing the bitrate of at least one digital sample value following the missing digital sample value.

In a further embodiment of the present invention, the number of bits of the missing digital sample value are used for increasing the bitrate of the digital sample value directly preceding the missing digital sample value and for increasing the bitrate of at least two digital sample values following the missing digital sample value.

In still a further embodiment of the present invention, the number of bits of the missing digital sample value are used for increasing the bitrate of the digital sample value directly preceding the missing sample and for increasing the bitrate of the digital sample value directly following the missing digital sample value in that each of these bitrates are increased by half of the predetermined number of bits.

Typically, when designing the system and defining the system performance, N is determined in that the result of the autocorrelation function of the N-th digital sample value following the missing digital sample value is at least equal to or exceeds a predetermined threshold value.

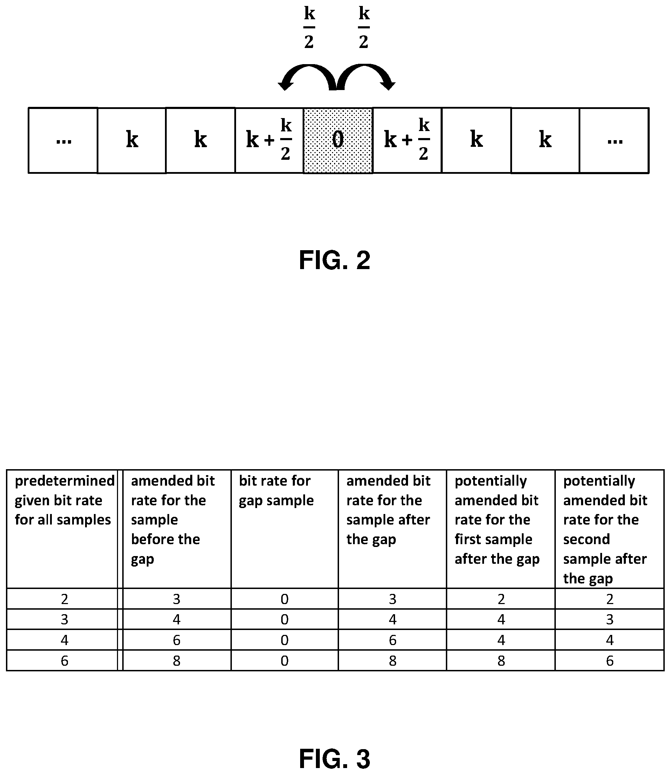

The process according to the invention is structured as a standard predictive quantizer with variable prediction order assuming a sufficient correlation between the samples (as required for predictive quantization techniques) and, if desirable, with variable bit rate. The contributions of the invention can be identified in the following two aspects:
- The order of the predictor must be dynamically set by encoding the sample which follows a gap by means of a standard "direct" quantizer (i.e. not predictive). Then, the following sample is encoded through a 1-st order predictor, which exploits, for the sample prediction, the information carried out by the previous sample only; the next one is then encoded through a 2-nd order predictor (in general, the j-th sample after the gap is encoded is encoded with a predictor filter of order j-1). The predictor order is increased until reaching the operative order of prediction which is defined at system design stage as trade-off between system complexity and achievable prediction gain (which is, in turn, dependent on the correlation properties of the signal under consideration).
- The dynamic bit allocation is introduced to efficiently exploit the resources originally assigned to the gap positions which do not carry informative content. Given a missing sample and its position in time known *a-priori,* the bits to encode such a missing sample are unnecessary, and are therefore exploited to increase the reconstruction quality of the samples before and after the gap. This is necessary since the missing sample is recovered at a later stage through proper interpolation, where the samples adjacent to the gap carry most of the information and need therefore to be represented as accurate as possible. For this, an efficient way to account for the statistical properties of the signal, for example, is to implement the Best Linear Unbiased (BLU) estimates of the signal itself at the desired locations, as known in the literature. As an example, given an average bit rate of k bits per sample, in presence of a gap, k/2 bits are additionally allocated for the samples before and after the gap position so that the previous and the subsequent samples will have a bit rate of k+k/2 when considering a missing sample (black) at a certain time instance of a signal quantized at k bits per samples to increase the overall quantization performance (depicted in Fig. 2). The performance of different allocation strategies in the gap vicinity has been evaluated showing that a higher signal quality is obtained by equally distributing the bits, originally assigned to the missing sample, to the samples right before and after the gap itself. Alternative bit allocation strategies are shown in the table of Fig. 3.

The present invention will be described in more detail hereinbelow with reference to the drawing which shows in
- Fig. 1: a simplified block scheme of the present invention,
- Fig. 2: a potential bit allocation strategy (schematically),
- Fig. 3: a table of alternative bit allocation strategies,
- Fig. 4: PRI sequence of constant-PRI SAR (left) and staggered SAR (right),
- Fig. 5: a waveform showing the theoretical correlation between raw azimuth samples as a function of time delay (PRI),
- Fig. 6: a schematic representation of a 4-th order PBAQ with a 4 bps bit rate implementation on SAR raw data, and
- Fig. 7: SQNR evaluated after SAR focusing operation.

As an example for the application of the invention, the raw data quantization of a staggered SAR system is considered in the following.

Synthetic aperture radar (SAR) represents nowadays a well-recognized technique for a broad variety of remote sensing applications, being able to acquire high-resolution images of the Earth's surface independently of sunlight and weather conditions. However, conventional SAR is constrained by the pulse repetition frequency (PRF) for the imaging of wide swaths and, at the same time, of fine azimuth resolutions. To overcome these limitations, in the last decades innovative spaceborne radar techniques have been proposed, which allow for high-resolution imaging of a wide swath width by exploiting multiple azimuth channels (MAC) and digital beamforming (DBF) in elevation to achieve Scan-on-Receive (SCORE). Alternatively, single-channel SAR based on the simultaneous recording of multiple echo pulses received from different directions (so-called "multibeam" mode) enables a further increase of the illuminated area by keeping reduced antenna sizes and avoiding the employment of burst modes. Such systems are still limited by the presence of blind ranges across the swath, which arise since the radar cannot receive while transmitting. The opportunity of exploiting the variation of the pulse repetition interval (PPI) to solve the blind range problem was first proposed independently in diverse publications. Then, the idea culminated in the staggered SAR concept, which includes a refined design of the PRI sequences, the use of proper interpolation on the raw data and consideration of the ambiguities [1], [2], [3]. By cyclically changing the pulse repetition interval (PRI), Staggered SAR allows to vary (i.e., to "stagger") the range positions of such data gaps along the azimuth dimension. In this way, high-resolution imaging of a large continuous swath of up to 350 km without the need for a long antenna with multiple apertures becomes possible.

The requirement of swath width and resolution, together with the use of large bandwidths and multiple acquisition channels, is clearly associated to the generation of a large volume of data, which implies, from the mission design point of view, harder requirements in terms of onboard memory and downlink capacity. In the context of single-channel staggered SAR systems, a method consisting in an interpolation combined with low-pass Doppler filtering and decimation of the acquired raw data has been proposed in [4], which allows for a data reduction of up to 50% at the cost of a significant onboard computational effort. In this scenario, SAR raw data quantization represents an aspect of utmost importance, since the number of bits employed to digitize the recorded radar signal, on the one hand, directly affects the performance of the resulting SAR products and, on the other hand, defines the total amount of data to be managed by the system.

Nowadays, one of the most widely used methods for SAR raw data compression is the block-adaptive quantization (BAQ). BAQ is a lossy data reduction technique which employs a space-varying estimation of the raw data statistics in order to set the quantization decision levels. BAQ offers a good trade-off between scheme complexity (a simple scalar quantizer), achievable compression ratio, and resulting image quality, and represents therefore an attractive solution for data volume reduction in spaceborne SAR systems. In the last years, novel compression algorithms have been proposed to allow for a finer performance and resource optimization, based on the implementation of non-integer quantization rates [5], combined with data-driven compression schemes [6], [7], [8]. Further, possible strategies for data volume reduction in the context of multi-channel SAR systems have been proposed in [9], [10].

Conventional SAR raw data usually show very little correlation among nearby samples, which can be only partially used for compression algorithms. On the other hand, in staggered SAR a significant azimuth oversampling is mandatory to properly reconstruct the information lost within the blind ranges. The resulting data redundancy can be therefore exploited to reduce the volume of data to be acquired and stored on board.

The invention addresses the use of linear predictive coding for onboard data reduction in staggered SAR systems. Linear predictive coding exploits the existing correlation between adjacent azimuth samples, which is introduced by the antenna pattern and the azimuth oversampling. This allows for an efficient encoding of the data stream and, in turn, for a reduction of the number of quantization bits for a given target performance, at the cost of a modest computational burden. The use of predictive quantization in the context of conventional SAR has been previously investigated in [11], [12].

Staggered synthetic aperture radar (SAR) is an innovative SAR acquisition concept which exploits digital beamforming (DBF) in elevation to form multiple receive beams and continuous variation of the pulse repetition interval to achieve high-resolution imaging of a wide continuous swath. Staggered SAR requires an azimuth oversampling higher than a SAR with constant PRI, which results in an increased volume of data. The use of linear predictive coding is investigated, which exploits the correlation properties exhibited by the non-uniform azimuth raw data stream. According to this, a prediction of each sample is calculated on board as linear combination of a set of previous samples. The resulting prediction error is then quantized and downlinked (instead of the original value), which allows for a reduction of the signal entropy and, in turn, of the onboard data rate achievable for a given target performance. In addition, the a-priori knowledge of the gaps position can be exploited to dynamically adapt the prediction order to further improve the performance and to further dynamically adapt the bit rate allocation in the vicinity of a gap so as to still further improve the performance. However, the present invention can also be used in SAR systems with gapped SAR data. Finally, the invention can be used in systems other than SAR in which digital signal processing is performed.

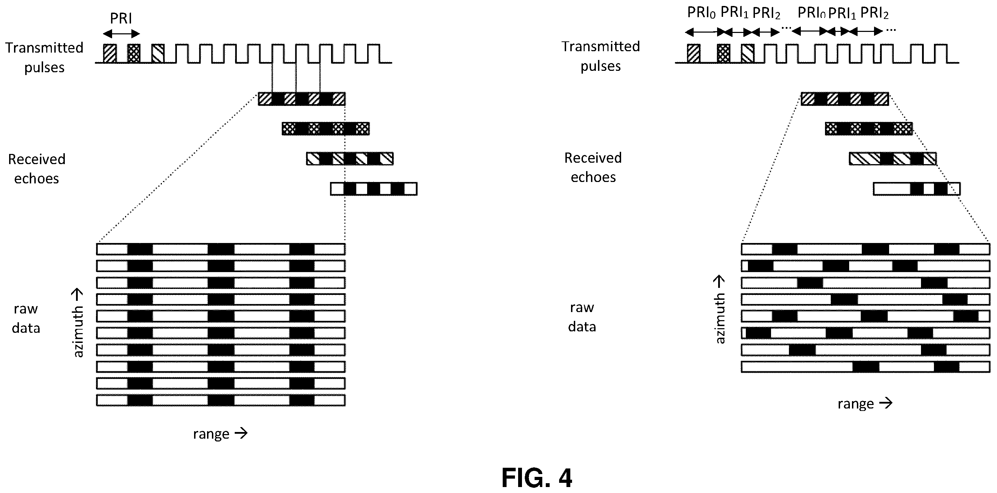

In SAR applications, data encoding is a critical aspect since the data rate is limited by the storage capacity of the platform (e.g. a satellite) and its downlink capacity, and affects, on the other hand, the quality of the resulting SAR products. A specific case of SAR system is a SAR system with gapped SAR data or the staggered SAR system [1] which allows for the acquisition of a wide ground range (in the order of hundreds of kilometers) at each survey by exploiting digital beamforming in elevation. As drawback, some samples in each range line are not received since the antenna is transmitting in that time slot. The location of such gaps (missing samples) is uniquely determined by timing constraints (acquisition geometry and sampling frequency) and is therefore known *a-priori.* In particular, staggered SAR implements the acquisition by varying the pulse repetition interval (PRI) in azimuth such that there are never two subsequent missing samples. Fig. 4 shows on the lefthand side the location of the missing samples if the employed PRI is constant, while on the right-hand side the location of the gaps is not fixed due to the use of staggered PRI (for the same ground range extension). It is possible to notice that, for a constant-PRI SAR, along the azimuth dimension the gaps are located at the same range position, while for a staggered SAR they are displaced along range such that an azimuth interpolation allows for proper recovering of the data. The recovery of the missing samples is done with a BLU interpolation along azimuth and, for this purpose, a significant azimuth oversampling is required in order to have an acceptable data correlation. In this example, the invention is applied for efficient encoding of the azimuth raw data signal in the context of the Tandem-L mission, a DLR mission proposal for a highly innovative bistatic SAR. For Tandem-L, the mean pulse repetition frequency (PRF) is of 2700 Hz (i.e. the mean PRI is of 0.37 ms) while the processed bandwidth is 1130 Hz, leading to an azimuth oversampling of about 140%.

For typical SAR applications, the quantization of the SAR raw data represents an aspect of utmost importance, since the number of bits employed to digitize the recorded radar signal directly affects the performance of the resulting SAR products, together with the total amount of data to be managed by the system. Considering a mean bit rate of 4 bits/sample (which is selected in order to minimize quantization effects in SAR performance), a direct quantization method (i.e. not exploiting the correlation properties of the signal) for the SAR raw data leads to a required data rate of about 16 terabytes per day, which poses severe constraints at mission design. An onboard solution to reduce the amount of data of a significant factor is mandatory for the mission success.

In conjunction with the staggered SAR system of [4], a method consisting in an interpolation combined with low-pass Doppler filtering and decimation of the acquired raw data has been proposed, which allows for a data reduction of up to 50% at the cost of a significant onboard computational burden. The generation of such a largely oversampled data leads also to a higher correlation among the samples, which can be exploited by the proposed invention to achieve onboard data volume reduction. In particular, the correlation in the raw data signal is introduced by the antenna pattern.

Considering a SAR azimuth line, the sample correlation obtained for the Tandem-L-like system is reported in Fig. 4 as a function of the azimuth time (PRI), and the average PRI and the resulting correlation are depicted by the green dot. As expected, the larger the time lag between the samples, the lower the correlation. According to the staggered SAR acquisition mode, the PRI slightly varies along the azimuth, hence the correlation between the samples is not constant. Even though, the approximation of the real staggered SAR signal with a constant PRI equal to the mean staggered PRI for the design of the predictive coder has shown no significant loss of performance. In this scenario, a strategy for efficient onboard data volume reduction proposed by the present invention is described in the following.

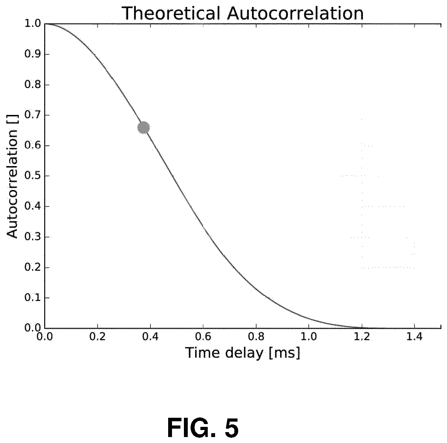

A state-of-the-art quantization technique for SAR application is the Block Adaptive Quantization (BAQ) which consists of a Max-Lloyd quantizer adapted to the statistics of signal blocks, which extend along a range line of a SAR raw data take. In this scenario, the predictive quantization is applied along the azimuth dimension, where more significant signal correlation is obtained in the data (see Fig. 5 showing the theoretical correlation between raw azimuth samples as function of time delay, wherein the average time delay of about 0.37 ms and the resulting correlation of around 0.66 are depicted by the dotted lines).

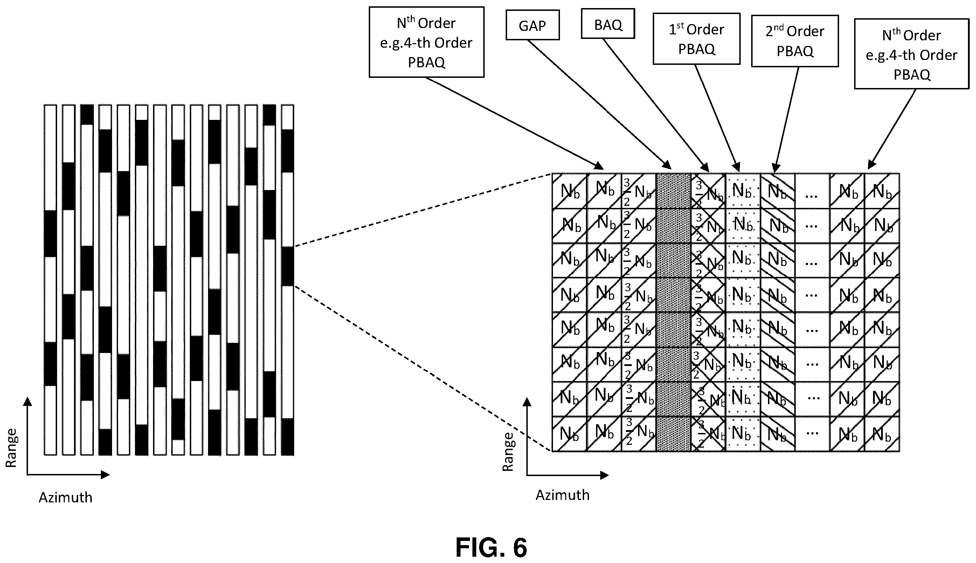

Considering the specific signal statistics and system characteristics of Tandem-L, the encoding is performed by means of a predictive quantizer of the 4-th order (it has been verified that higher prediction orders do not lead to significant performance improvement) and the prediction errors are encoded with a standard BAQ. Predictive coding has been specifically structured to be flexible after the occurrence of a gap starting over the prediction until reaching the operative 4-th order prediction, as pictured in Fig. 6. Each cell represents a sample and the number represents the number of bits allocated for each sample. The higher quantization rate nearby the gap exploits the bits of the gap (4 in this case). After the gap (black cells), the first sample is quantized with a direct BAQ (i.e. no prediction is applied), then each following sample is quantized performing the prediction with the available previous samples until reaching the 4-th order. It is important to notice that the gap line in Fig. 6 represents qualitatively one of the black "squares" depicted in Fig. 4: in fact, gaps in staggered SAR extend by one sample in azimuth and by hundreds of samples along range [1].

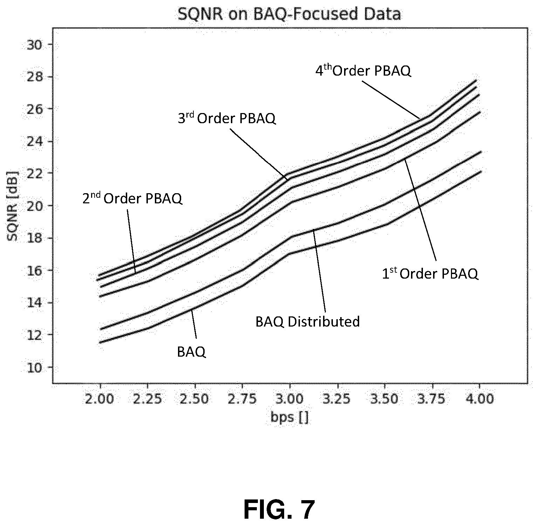

Once the encoding has been completed, the non-uniform signal is transmitted on ground where the BLU interpolation is performed in order to resample the data to a uniform PRI grid (which is mandatory in order to apply standard SAR processing algorithms). After the SAR focusing operation the SQNR is evaluated by comparing different orders of prediction with a BAQ with constant bit rate (state of the art). Additionally, the performance of a BAQ with variable bit allocation (considering the a-priori knowledge of gap position) is considered as well. The results depicted in Fig. 7 suggest that, for this application, if a 4-bit BAQ is considered as reference, the presented invention allows to achieve the same performance (SQNR of about 22 dB) by allocating 3 bits/sample (i.e. one bit less) and encoding the data with a dynamic Predictive quantizer of the 4-th order (see continuous line in Fig. 7). The reported results refer to a BAQ quantizer (used as reference), a BAQ quantizer with variable bit rate in gap vicinity ("BAQ Distributed") and Predictive-BAQ (PBAQ) at different orders of prediction by exploiting variable bit rate and dynamic prediction order as proposed by the invention. Going from 4 to 3 bit/sample corresponds to a reduction of the overall data rate of 25%, by slightly increasing the complexity of the system. This is translated to a payload of 12 Terabytes per day with respect to the 16 Terabytes per day achieved with a state of the art compression technique. If compared with the approach proposed in [4], the present method results in a higher data rate but allows for a simpler and cheaper implementation, i.e. it needs significantly less range lines (up to four, being four the target order of prediction) to be stored in the onboard computing memory (FPGA). FPGAs have indeed strong storage limitations making the onboard real-time implementation a cost-driving challenge. Moreover, it preserves the non-uniformly sampled SAR raw data that may be used for a more advanced on-ground processing.

The present invention can be used in the design and development of future SAR sensors, for SAR performance optimization and SAR mission acquisition planning. Also the present invention can be used in all other digital signal processing technologies using block-wise integer quantization.

### REFERENCES CITED

[1] M. Villano, G. Krieger, and A. Moreira, "Staggered SAR: High-resolution wide-swath imaging by continuous PRI variation," IEEE Trans. Geosci. and Remote Sens., vol. 52, no. 7, pp. 4462-4479, July 2014.
[2] M. Villano, K. G. and A. Moreira, "A novel processing strategy for staggered SAR," IEEE Geosci. Remote Sens. Lett., vol. 11, no. 11, pp. 1891-1895, November 2014.
[3] M. Villano, K. G. M. Jäger, and A. Moreira, "Staggered SAR: Performance analysis and experiments with real data" IEEE Trans. on Geosci Remote Sens., vol. 55, no. 11, pp. 6617-6638, November 2017.
[4] M. Villano, G. Krieger, and A. Moreira, "Onboard processing for data volume reduction in high-resolution wide-swath SAR," IEEE Geosci. Remote Sens. Lett., vol. 13, no. 8, pp. 1173-1177, August 2016.
[5] M. Martone, B. Bräutigam, and G. Krieger, "Azimuth-Switched Quantization for SAR systems and performance analysis on TanDEM-X data," IEEE Geosci. Remote Sens. Lett., vol. 11, no. 1, pp. 181-185, January 2014.
[6] T. Algra, "Data compression for operational SAR missions using entropy-constrained block adaptive quantization," in Proc. Int. Geosci. Remote Sens. Symp., pp. 1135-1138.
[7] E. Attema, C. Cafforio, M. Gottwald, P. Guccione, A. M. Guarnieri, F. Rocca, and P. Snoeij, "Flexible dynamic block adaptive quantization for Sentinel-1 SAR missions," IEEE Geosci. Remote Sens. Lett., vol. 7, no. 4, pp. 766-770, October 2010
[8] P. Guccione and A. M. Guarnieri, "A space adaptive quantizer for spaceborne SAR," IEEE Trans. Geosci. Remote Sens., vol. 49, no. 10, pp. 3564-3573, October 2011.
[9] P. Guccione, M. Scagliola, and D. Giudici, "Principal components dynamic block quantization for multichannel SAR," in IEEE Int. Geosci. Remote Sens. Symp., Bejing, China, July 2016, pp. 2090-2093
[10] M. Martone, M. Villano, M. Younis, and G. Krieger, "An efficient onboard quantization strategy for multi-channel SAR systems," in Proc. EUSAR, Aachen, Germany, June 2018, pp. 1-6.
[11] E. Magli and G. Olmo, "Lossy predictive coding of SAR raw data," IEEE Trans. Geosci. and Remote Sens., vol. 41, no. 5, pp. 977-987, May 2003.
[12] T. Ikuma, M. Naraghi-Pour, and T. Lewis, "Predictive quantization of range-focused SAR raw data," IEEE Trans. Geosci. and Remote Sens., vol. 50, no. 4, pp. 1340-1348, April 2012.

### ABBREVIATIONS

- SAR: Synthetic Aperture Radar
- PRF: Pulse Repetition Frequency
- MAC: Multiple Azimuth Channel
- DBF: Digital Beam Forming
- SCORE: Scan-on-Receive
- BAQ: Block-Adaptive Quantization
- DP-BAQ: Dynamic Predictive Block-Adaptive Quantization
- BLU: Best Linear Unbiased
- PRI: Pulse Repetition Interval
- SQNR: Signal-to-Quantization Noise Ratio

## Claims

1. Method for reconstructing less than two subsequent missing samples in azimuth of a received signal in the azimuth dimension and with correlation between adjacent azimuth samples in a SAR system, especially for effective data volume reduction in the SAR system, comprising
- providing, with a predetermined sample frequency, a series of digital sample values of a received correlated analog signal including *a-priori* knowledge of a position of a missing digital sample value within the series of digital sample values, wherein the digital sample values have a predetermined bitrate defined by a predetermined number of bits,
- encoding the series of digital sample values by means of an N-th order predictive quantization, wherein N is a natural number equal to or larger than 1, and
- recovering the missing digital sample value by means of an interpolation allowing for the reconstruction of the missing digital sample value by exploiting the neighboring samples and the correlation properties among them by way of encoding digital sample values following the missing digital sample value by applying a dynamic order predictive quantization in that,
- for the first digital sample value following the missing digital sample value, a quantization is performed and
- for each of the next digital sample values following said first digital sample value up to the next missing sample value, performing a predictive order quantization, wherein
- for each of those next respective j-th digital sample values, with j=2,3,...,N, a j-1-th order predictive quantization is performed, and
- for each of those next respective j-th digital sample values, with j≥N+1, an N-th order predictive quantization is performed.

2. Method according to claim 1, wherein the quantization of the first digital sample value following the missing digital sample value is a block-wise quantization such as a block adaptive quantization.

3. Method according to claim 1 or 2, **characterized in that** the number of bits for the missing digital sample value are used for increasing the bitrate for at least one of the digital sample values adjacent the missing digital sample value.

4. Method according to claim 3, **characterized in that** increasing the bitrates for at least two of the digital sample values adjacent the missing digital sample value is applied to the same degree or to substantially the same degree.

5. Method according to claim 3 or 4, **characterized in that** the number of bits of the missing digital sample value are used for increasing the bitrate of the digital sample value directly preceding the missing digital sample value and for increasing the bitrate of at least one digital sample value following the missing digital sample value.

6. Method according to any one of claims 3 to 5, **characterized in that** the number of bits of the missing digital sample value are used for increasing the bitrate of the digital sample value directly preceding the missing digital sample value and for increasing the bitrate of at least two digital sample values following the missing digital sample value.

7. Method according to any one of claims 3 to 6, **characterized in that** the number of bits of the missing digital sample value are used for increasing the bitrate of the digital sample value directly preceding the missing sample and for increasing the bitrate of the digital sample value directly following the missing digital sample value **in that** each of these bitrates are increased by half of the predetermined number of bits.

8. Method according to any one of claims 1 to 7, **characterized in that** N is determined **in that** the result of the autocorrelation function of the N-th digital sample value following the missing digital sample value is at least equal to or exceeds a predetermined threshold value.

## Patentansprüche

1. Verfahren zur Rekonstruktion von weniger als zwei aufeinanderfolgenden fehlenden Abtastungen im Azimut eines empfangenen Signals in der Azimut-Dimension und mit Korrelation zwischen benachbarten Azimut-Abtastungen in einem SAR-System, insbesondere zur effektiven Datenvolumenreduzierung in dem SAR-System, umfassend
- Bereitstellen, mit einer vorbestimmten Abtastfrequenz, einer Reihe von digitalen Abtastwerten eines empfangene korrelierten Signals, das *a priori* Wissen einer Position eines fehlenden digitalen Abtastwerts innerhalb der Reihe von digitalen Abtastwerten umfasst, wobei die digitalen Abtastwerte eine vorbestimmte Bitrate haben, die durch eine vorbestimmte Anzahl von Bits definiert wird,
- Codieren der Reihe von digitalen Abtastwerten mittels einer prädiktiven Quantisierung N-ter Ordnung, wobei N eine natürliche Zahl gleich oder größer als 1 ist, und
- Wiederherstellen des fehlenden digitalen Abtastwerts mittels einer Interpolation, welche die Rekonstruktion des fehlenden digitalen Abtastwerts unter Ausnutzung der benachbarten Abtastungen und der Korrelationseigenschaften unter ihnen ermöglicht, indem digitale Abtastwerte nach dem fehlenden digitalen Abtastwert durch Anwendung einer prädiktiven Quantisierung dynamischer Ordnung codiert werden, dadurch dass
- für den ersten digitalen Abtastwert nach dem fehlenden digitalen Abtastwert eine Quantisierung durchgeführt wird, und
- für jeden der nächsten digitalen Abtastwerte nach diesem ersten digitalen Abtastwert bis zu dem nächsten fehlenden Abtastwert eine Quantisierung prädiktiver Ordnung durchgeführt wird, wobei
- für alle derjenigen nächsten entsprechenden j-ten digitalen Abtastwerte, mit j=2,3,...,N, eine prädiktive Quantisierung j-1-ter Ordnung durchgeführt wird, und
- für alle derjenigen nächsten entsprechenden j-ten digitalen Abtastwerte, mit j≥N+1, eine prädiktive Quantisierung N-ter Ordnung durchgeführt wird.

2. Verfahren nach Anspruch 1, wobei die Quantisierung des ersten digitalen Abtastwerts nach dem fehlenden digitalen Abtastwert eine blockweise Quantisierung wie z. B. eine block-adaptive Quantisierung ist.

3. Verfahren nach Anspruch 1 oder 2, **dadurch gekennzeichnet, dass** die Anzahl von Bits für den fehlenden digitalen Abtastwert verwendet wird, um die Bitrate für mindestens einen der digitalen Abtastwerte benachbart zu dem fehlenden digitalen Abtastwert zu erhöhen.

4. Verfahren nach Anspruch 3, **dadurch gekennzeichnet, dass** das Erhöhen der Bitraten für mindestens zwei der digitalen Abtastwerte benachbart zu dem fehlenden digitalen Abtastwert in gleichem Maße oder im Wesentlichen im gleichen Maße angewendet wird.

5. Verfahren nach Anspruch 3 oder 4, **dadurch gekennzeichnet, dass** die Anzahl von Bits des fehlenden digitalen Abtastwerts verwendet werden, um die Bitrate des digitalen Abtastwerts unmittelbar vor dem fehlenden digitalen Abtastwert zu erhöhen, und um die Bitrate mindestens eines digitalen Abtastwerts nach dem fehlenden digitalen Abtastwert zu erhöhen.

6. Verfahren nach einem der Ansprüche 3 bis 5, **dadurch gekennzeichnet, dass** die Anzahl von Bits des fehlenden digitalen Abtastwerts verwendet wird, um die Bitrate des digitalen Abtastwerts unmittelbar vor dem fehlenden digitalen Abtastwert zu erhöhen, und um die Bitrate von mindestens zwei digitalen Abtastwerten nach dem fehlenden digitalen Abtastwert zu erhöhen.

7. Verfahren nach einem der Ansprüche 3 bis 6, **dadurch gekennzeichnet, dass** die Anzahl von Bits des fehlenden digitalen Abtastwerts verwendet wird, um die Bitrate des digitalen Abtastwerts unmittelbar vor dem fehlenden digitalen Abtastwert zu erhöhen, und um die Bitrate des digitalen Abtastwerts unmittelbar nach dem fehlenden digitalen Abtastwert zu erhöhen, indem jede dieser Bitraten um die Hälfte der vorbestimmten Anzahl von Bits erhöht wird.

8. Verfahren nach einem der Ansprüche 1 bis 7, **dadurch gekennzeichnet, dass** N so bestimmt wird, dass das Ergebnis der Autokorrelationsfunktion des N-ten digitalen Abtastwerts nach dem fehlenden digitalen Abtastwert mindestens gleich einem vorbestimmten Schwellenwert ist oder diesen überschreitet.

## Revendications

1. Procédé de reconstruction de moins de deux échantillons manquants successifs dans l'azimut d'un signal reçu dans la dimension azimutale et avec une corrélation entre des échantillons d'azimut adjacents dans un système de SAR, particulièrement pour une réduction de volume de données efficace dans le système de SAR, comprenant les étapes consistant à :
- obtenir, avec une fréquence d'échantillonnage prédéterminée, une série de valeurs numériques d'échantillon d'un signal analogique corrélé reçu comprenant une connaissance a priori d'une position d'une valeur numérique d'échantillon manquant dans la série de valeurs numériques d'échantillon, dans lequel les valeurs numériques d'échantillon ont un débit binaire prédéterminé défini par un nombre prédéterminé de bits,
- coder la série de valeurs numériques d'échantillon au moyen d'une quantification prédictive de N-ième ordre, dans lequel N est un nombre naturel supérieur ou égal à 1, et
- restaurer la valeur numérique d'échantillon manquant au moyen d'une interpolation autorisant la reconstruction de la valeur numérique d'échantillon manquant par une exploitation des échantillons voisins et des propriétés de corrélation entre eux au moyen d'un codage de valeurs numériques d'échantillon suivant la valeur numérique d'échantillon manquant par une application d'une quantification prédictive d'ordre dynamique en ce que,
- pour la première valeur numérique d'échantillon suivant la valeur numérique d'échantillon manquant, une quantification est effectuée, et
- pour chacune des valeurs numériques d'échantillon suivantes suivant ladite première valeur numérique d'échantillon jusqu'à la valeur d'échantillon manquant suivant, effectuer une quantification prédictive d'ordre, dans lequel
- pour chacune des j-ième valeurs numériques d'échantillon respectives suivantes, avec j=2,3,...,N, une quantification prédictive de j-1-ième ordre est effectuée, et
- pour chacune des j-ième valeurs numériques d'échantillon respectives suivantes, avec j ≥ N+1, une quantification prédictive de N-ième ordre est effectuée.

2. Procédé selon la revendication 1, dans lequel la quantification de la première valeur numérique d'échantillon suivant la valeur numérique d'échantillon manquant est une quantification par blocs telle qu'une quantification adaptative de blocs.

3. Procédé selon la revendication 1 ou la revendication 2, **caractérisé en ce que** le nombre de bits de la valeur numérique d'échantillon manquant est utilisé pour une augmentation du débit binaire d'au moins l'une des valeurs numériques d'échantillon adjacentes à la valeur numérique d'échantillon manquant.

4. Procédé selon la revendication 3, **caractérisé en ce que** l'augmentation des débits binaires d'au moins deux des valeurs numériques d'échantillon adjacentes à la valeur numérique d'échantillon manquant est appliquée selon le même degré ou selon sensiblement le même degré.

5. Procédé selon la revendication 3 ou la revendication 4, **caractérisé en ce que** le nombre de bits de la valeur numérique d'échantillon manquant est utilisé pour augmenter le débit binaire de la valeur numérique d'échantillon précédant directement la valeur numérique d'échantillon manquant et pour augmenter le débit binaire d'au moins une valeur numérique d'échantillon suivant la valeur numérique d'échantillon manquant.

6. Procédé selon l'une quelconque des revendications 3 à 5, **caractérisé en ce que** le nombre de bits de la valeur numérique d'échantillon manquant est utilisé pour augmenter le débit binaire de la valeur numérique d'échantillon précédant directement la valeur numérique d'échantillon manquant et pour augmenter le débit binaire d'au moins deux valeurs numériques d'échantillon manquant suivant la valeur numérique d'échantillon manquant.

7. Procédé selon l'une quelconque des revendications 3 à 6, **caractérisé en ce que** le nombre de bits de la valeur numérique d'échantillon manquant est utilisé pour augmenter le débit binaire de la valeur numérique d'échantillon précédant directement l'échantillon manquant et pour augmenter le débit binaire de la valeur numérique d'échantillon suivant directement la valeur numérique d'échantillon manquant **en ce que** chacun de ces débits binaires est augmenté de la moitié du nombre prédéterminé de bits.

8. Procédé selon l'une quelconque des revendications 1 à 7, **caractérisé en ce que** N est déterminé **en ce que** le résultat de la fonction d'autocorrélation de la N-ième valeur numérique d'échantillon suivant la valeur numérique d'échantillon manquant est au moins égale ou supérieure à une valeur seuil prédéterminée.
